# EUROPÄISCHE PATENTSCHRIFT

(11) **EP 0 962 496 B1**
(45) Veröffentlichungstag und Bekanntmachung des Hinweises auf die Patenterteilung: **10.03.2004**
(21) Anmeldenummer: 99110682.4
(22) Anmeldetag: 02.06.1999
(51) Int. Cl.: C08L 71/12, C08L 23/06

(54) **Halogenfrei flammgeschützte thermoplastische Formmassen auf Basis von Polyphenylenethern und vinylaromatischen Polymeren**
Halogen-free, flame-retardant thermoplasic compositions of Polyphenylene ethers and vinyl aromatic polymers
Masses de moulage de Polyphenylene ethers et polymères vinyle aromatiques, resistants au feu et sans Halogènes

(30) Priorität: 04.06.1998 DE 19824981
(43) Veröffentlichungstag der Anmeldung: 08.12.1999
(73) Patentinhaber: DEMI Vertriebs- und Beteiligungsgesellschaft mbH, 20459 Hamburg (DE)
(72) Erfinder: Gottschalk, Axel Dr., 67435 Neustadt (DE); Weber, Martin Dr., 67487 Maikammer (DE); Weiss, Robert Dr., 67281 Kirchheim (DE)
(74) Vertreter: Patentanwälte Zellentin & Partner

(56) Entgegenhaltungen:
- EP-A- 0 095 098
- EP-A- 0 362 660
- EP-A- 0 550 204
- EP-A- 0 719 832
- WO-A-91/05016
- DATABASE WPI Section Ch, Week 9542 Derwent Publications Ltd., London, GB; Class A18, AN 95-325627 XP002116372 & JP 07 224192 A (ASAHI KASEI KOGYO KK), 22. August 1995 (1995-08-22)

## Beschreibung

Die vorliegende Erfindung betrifft halogenfrei flammgeschützte thermoplastische Formmassen, enthaltend
A) 15 bis 87 Gew.-% eines Polyphenylenethers,
B) 10 bis 82 Gew.-% eines schlagzähmodifizierten vinylaromatischen Polymers, das mit der Komponente A) verträglich ist,
C) 0,5 bis 30 Gew.-% an Schlagzähmodifiern, die von der Komponente B) verschieden sind,
D) 1,0 bis 4,0 Gew.-% an Polyethylen mit einer Dichte, bestimmt nach ISO 1183, im Bereich von 0,935 bis 0,980 g/ml,
E) 1,5 bis 15 Gew.-% eines Flammschutzmittels sowie
F) 0 bis 50 Gew.-% an weiteren Zusätzen,
wobei die Komponenten A) bis F) sich immer zu 100 Gew.-% addieren.

Weiterhin betrifft die vorliegende Erfindung die Verwendung von flammwidrigen thermoplastischen Formmassen zur Herstellung von Fasern, Folien und Formkörpern und die daraus erhältlichen Fasern, Folien und Formkörper. Außerdem betrifft die Erfindung die Verwendung von Polyethylen hoher Dichte als Antitropfmittel in thermoplastischen Formmassen auf der Basis von Polyphenylenethern und vinylaromatischen Polymeren.

Thermoplastische Polymermischungen aus Polyphenylenether (PPE) und vinylaromatischen Polymeren wie Styrolpolymerisaten sind z.B. aus den US-Patentschriften 3,383,435; 4,128,602 sowie 4,128,603 bekannt. Solche Formmassen eignen sich zur Herstellung von Formteilen, die sich im Vergleich zu schlagzähmodifizierten Styrolpolymerisaten (HIPS, High Impact Polystyrol), die nicht mit Polyphenylenethern abgemischt sind, durch eine bessere Wärmeformbeständigkeit auszeichnen. Eine ausführliche Beschreibung der Eigenschaften dieser Polymermischungen findet sich auch in L. Bottenbruch, "Technische Polymer-Blends", Kunststoff Handbuch 3/2, S. 63 ff, Hanser Verlag, München, 1993.

Ein wesentlicher Vorteil der Polymerblends aus Polyphenylenether und Styrolpolymerisaten ist darin zu sehen, daß durch Beimengung halogenfreier Zusätze, wobei insbesondere phosphorhaltige Verbindungen zu erwähnen sind, Formmassen hergestellt werden können, die flammwidrig sind und daher für viele Anwendungen im Be reich der Elektrotechnik einsetzbar werden. Für den Einsatz auf dem Gebiet der Elektrotechnik ist insbesondere die Prüfung der Flammwidrigkeit nach UL 94 (z.B. beschrieben in J. Troitzsch, "International Plastics Flammability Handbook", S. 346 ff., Hanser Verlag, München, 1990) ausschlaggebend. Bei dieser Prüfung werden vertikal befestigte Probekörper mehrfach beflammt. Dabei erhitzt sich der Probekörper sehr stark, was in vielen Fällen dazu führt, daß brennendes Polymermaterial abtropft und die unter dem Stab angebrachte Bodenwatte entzündet. Dieses unerwünschte Verhalten wird insbesondere dann beobachtet, wenn zum Erreichen kurzer Brandzeiten große Mengen an Flammschutzmittel eingesetzt werden müssen.

Das Problem des brennenden Abtropfens bei der UL 94-Prüfung ist seit langem bekannt und wird in der Technik meist durch Zusatz kleiner Mengen Teflon als Antitropfmittel gelöst (US-Patentschrift 4,107,232). Man ist jedoch aufgrund der offenkundigen Toxizität von bei der Verbrennung halogenhaltiger Substanzen freiwerdender Schadstoffe in jüngster Zeit bestrebt, den Einsatz derartiger Verbindungen in thermoplastischen Formmassen vollständig bzw. nahezu vollständig zu vermeiden.

Es ist bekannt, daß mittels Zusatz hochmolekularer bzw. ultrahochmolekularer Polymere zu thermoplastischen Formmassen aus Polyphenylenethern und Polystyrolen das brennende Abtropfen der Formmasse vollständig eingeschränkt oder unterbunden werden kann.

Als halogenfreies Antitropfmittel wird ultrahochmolekulares Polyethylen in der Europäischen Anmeldeschrift EP-A 550 204 beschrieben. Danach verhindert ein Zusatz an ultrahochmolekularem Polyethylen das Abtropfen von thermoplastischen Formmassen aus Polyphenylenethern und Styrolpolymeren vollständig. Aufgrund der Unverträglichkeit zwischen Polyethylen und Polyphenylenether bzw. Polystyrol führen jedoch schon kleine Mengen an Polyethylen zur Verschlechterung der mechanischen Eigenschaften der Formmassen, wobei insbesondere die Schädigungsarbeit W_{S} bzw. die multiaxiale Zähigkeit drastisch abfällt.

Gemäß EP-A 0 362 660 tritt der auf die Unverträglichkeit von Polyphenylenethern und Polyolefinen zurückgehende Effekt der Delaminierung dann nicht auf, wenn lineares Polyethylen geringer Dichte (PE-LLD) mit einem Schmelzeindex kleiner 5 g/10 min als Blendkomponente verwendet wird.

Auch hochmolekulare Polystyrole führen zu einer Verbesserung des Abtropfverhaltens (EP-PS 305 764). Aus der US-Patentschrift 5,008,314 ist überdies bekannt, daß hochmolekulares Polystyrol die Spannungsrißbeständigkeit der Polymer-Blends aus Polyphenylenether und schlagfestem Polystyrol wesentlich verbessert. Hochmolekulares Polystyrol wird ebenfalls zur Herstellung von Polyphenylenoxid/Polystyrol-Formmassen, die für die Blasformverarbeitung geeignet sind, verwendet (EP-A 476 366). Allerdings erhöht das in der Regel durch radikalische Polymerisation hergestellte hochmolekulare Polystyrol die Schmelzeviskosität bei den für die Spritzgußverarbeitung relevanten Schergeschwindigkeiten in unvorteilhafter Weise. Außerdem wird die Zähigkeit der Formmassen mit steigendem Anteil an hochmolekularem Polystyrol herabgesetzt. Besonders nachteilig ist, daß sowohl bei der Verwendung von hochmolekularem Polystyrol als auch bei der Verwendung von hochmolekularem Polyethylen als Antitropfmittel längere Brandzeiten bei der UL 94-Prüfung auftreten und insbesondere die multiaxiale Zähigkeit sich verschlechtert.

Der Erfindung lag daher die Aufgabe zugrunde, halogenfrei flammgeschützte thermoplastische Formmassen auf der Basis von Polyphenylenethern und vinylaromatischen Polymeren bereitzustellen, die ein Antitropfmittel enthalten, welches bewirkt, daß im Brandtest nach UL 94 kein brennendes Abtropfen auftritt und daß gleichzeitig die Fließfähigkeit und die multiaxiale Zähigkeit nicht nachteilig beeinflußt wird.

Demgemäß wurden die eingangs definierten thermoplastischen Formmassen gefunden.

Weiterhin wurden deren Verwendung zur Herstellung von Fasern, Folien und Formkörpern sowie die hierbei erhältlichen Fasern, Folien und Formkörper gefunden. Außerdem wurde die Verwendung von Polyethylen mit einer Dichte im Bereich von 0,935 bis 0,980 g/ml als Antitropfmittel in thermoplastischen Formmassen gefunden.

Als Komponente A) wird erfindungsgemäß wenigstens ein an sich bekannter Polyphenylenether (PPE) verwendet, wobei es sich um Homo-, Co- oder Pfropfcopolymere handeln kann. Insbesondere sind dies Verbindungen auf Basis von substituierten, insbesondere disubstituierten Polyphenylenethern, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome, wie Chlor oder Brom, und Alkylreste mit 1 bis 4 Kohlenstoffatomen, die vorzugsweise kein α-ständiges tertiäres Wasserstoffatom aufweisen, z.B. Methyl- Ethyl-, Propyl- oder Butylreste, zu nennen. Die Alkylreste können wiederum durch Halogenatome, wie Chlor oder Brom, oder durch eine Hydroxylgruppe substituiert sein. Weitere Beispiele möglicher Substituenten sind Alkoxyreste, vorzugsweise mit bis zu 4 Kohlenstoffatomen, wie Methoxy, Ethoxy, n-Propoxy und n-Butoxy, oder gegebenenfalls durch Halogenatome und/oder Alkylgruppen substituierte Phenylreste. Ebenfalls geeignet sind Copolymere verschiedener Phenole, beispielsweise Copolymere von 2,6-Dimethylphenol und 2,3,6-Trimethylphenol. Selbstverständlich können auch Gemische verschiedener Polyphenylenether eingesetzt werden. Die Polyphenylenether A) sind in den erfindungsgemäßen Formmassen in einer Menge von 5,0 bis 97,5, bevorzugt 15,0 bis 87 Gew.-%, bezogen auf das Gesamtgewicht der thermoplastischen Formmasse, enthalten. Geeignete Polyphenylenether und Verfahren zu deren Herstellung werden z.B. in den US-Patentschriften US 3,306,874, US 3,306,875, US 3,257,357 und US 3,257,358 beschrieben.

Beispiele für Polyphenylenether sind Poly(2,6-dilauryl-1,4- phenylenether), Poly(2,6-diphenyl-1,4-phenylenether), Poly(2,6- dimethoxy-1,4-phenylenether), Poly(2,6-diethoxy-1,4-phenylenether), Poly(2-methoxy-6-ethoxy-1,4-phenylenether), Poly(2-ethyl- 6-stearyloxy-1,4-phenylenether), Poly-(2,6-dichlor-1,4-phenylenether), Poly(2-methyl-6-phenyl-1,4-phenylenether), Poly(2,6- dibenzyl-1,4-phenylenether), Poly(2-ethoxy-1,4-phenylenether), Poly(2-chlor-1,4-phenylenether), Poly(2,5-dibrom-1,4-phenylenether). Bevorzugt werden Polyphenylenether eingesetzt, bei denen die Substituenten Alkylreste mit 1 bis 4 Kohlenstoffatomen sind; als besonders geeignet haben sich Poly(2,6-dialkyl-1,4-phenylenether) erwiesen, wie Poly(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether und Poly(2-ethyl-6-propyl-1,4-phenylenether). Besonders bevorzugt wird Poly(2,6-dimethyl-1,4-phenylenether) eingesetzt, insbesondere solches mit einer intrinsischen Viskosität im Bereich von 0,30 bis 0,60 dl/g, gemessen in Toluol bei 25°C und einer Konzentration von 0,6 g/100 ml.

Unter Polyphenylenether im Sinne der Erfindung sollen auch solche verstanden werden, die mit Monomeren, wie Fumarsäure, Zitronensäure, Maleinsäure oder Maleinsäureanhydrid modifiziert sind. Üblicherweise wird der Polyphenylenether durch Einbau mindestens einer Carbonyl-, Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß eine hinreichende Verträglichkeit mit dem zweiten Polymeren der Mischung, dem Polyamid, gewährleistet ist. Derartige Polyphenylenether sind u.a. in der WO-A 86/02086, WO-A- 87/00540, EP-A-0 222 246, EP-A-0 223 116 und EP-A-0 254 048 beschrieben.

Die Modifizierung wird im allgemeinen durch Umsetzung eines Polyphenylenethers mit einem Modifiziermittel, das mindestens eine der oben genannten Gruppen enthält, in Lösung (WO-A 86/2086), in wäßriger Dispersion, in einem Gasphasenverfahren (EP-A-25 200) oder bevorzugt in der Schmelze, gegebenenfalls in Gegenwart von geeigneten vinylaromatischen Polymeren oder Schlagzähmodifiern, durchgeführt, wobei wahlweise Radikalstarter zugegen sein können.

Besonders geeignete Modifiziermittel sind Maleinsäure, Methylmaleinsäure, Itaconsäure, Tetrahydrophthalsäure, deren Anhydride und Imide, Fumarsäure, die Mono- und Diester dieser Säuren, z.B. mit C₁- bis C₈-Alkanolen, die Mono- oder Diamide dieser Säuren wie N-Phenylmaleinimid, Maleinhydrazid, das Säurechlorid des Trimelithsäureanhydrids, Benzol-1,2-dicarbonsäureanhydrid-4-carbonsäure-essigsäureanhydrid, Chlorethanoylsuccinaaldehyd, Chlorformylsuccinaldehyd, Zitronensäure und Hydroxysuccinsäure. Bevorzugt sind als Modifier Fumarsäure und Zitronensäure, besonders bevorzugt ist Zitronensäure, insbesondere wasserfreie Zitronensäure.

Die Komponente A) kann ausschließlich aus nicht modifiziertem Polyphenylenether, ausschließlich aus modidiziertem Polyphenylenether oder aus einer beliebigen Mischung von nicht modidiziertem und modifiziertem Polyphenylenether bestehen. Hinsichtlich der physikalischen Eigenschaften der Polyphenylenether werden bevorzugt solche eingesetzt, die ein mittleres Molekulargewicht M_{w} (Gewichtsmittel) von 8000 bis 70000, vorzugsweise 12000 bis 60000 und insbesondere 25000 bis 50000 g/mol, aufweisen. Dies entspricht einer Grenzviskosität von etwa 0,18 bis 0,9, vorzugsweise von 0,25 bis 0,7 und insbesondere von 0,39 bis 0,6 dl/g, gemessen in Chloroform bei 25°C nach DIN 53 726.

Die Bestimmung der Molekulargewichtsverteilung erfolgt im allgemeinen mittels Gelpermeationschromatographie (Shodex-Trennsäule 0,8 x 50 cm des Typs A 803, A 804 und A 805 mit Tetrahydrofuran (THF) als Elutionsmittel bei Raumtemperatur). Die Lösung der PPE-Proben in THF erfolgt unter Druck bei 110°C, wobei 0,16 ml einer 0,25 gew.-%igen Lösung injiziert werden. Die Detektion erfolgt im allgemeinen mit einem UV-Detektor. Die Eichung der Säulen wurde mit PPE-Proben durchgeführt, deren absolute Molekulargewichtsverteilungen durch eine GPC-Laser-Lichtstreuungskombination bestimmt wurden.

Als Komponente B) werden, schlagzähmodifizierte vinylaromatische Polymere eingesetzt, die mit der Komponente A) verträglich sind. Die Komponente B) ist in den erfindungsgemäßen Formmassen in Mengen von 10 bis 82 Gew.-%, bezogen auf das Gesamtgewicht der thermoplastischen Formmasse, enthalten.

Beispiele für bevorzugte, mit Polyphenylenethern verträgliche vinylaromatische Polymere sind der Monographie von O. Olabisi, Polymer-Polymer Miscibility, Academic Press, 1979, S. 224 bis 230 und 245 zu entnehmen.

Als schlagzähmodifizierte Styrolpolymerisate eignen sich Homound Copolymerisate von vinylaromatischen Monomeren mit 8 bis 12 C-Atomen, welche in Gegenwart eines Kautschuks hergestellt werden. Der Kautschukgehalt beträgt 5 bis 25 Gew.-%, vorzugsweise 8 bis 17 Gew.-%. Eine Beschreibung der Struktur, Eigenschaften und Herstellung schlagzähmodifizierter Polystyrole findet sich in der Übersichtsliteratur (A. Echte, F. Haaf, J. Hambrecht in Angew. Chem. (Int. Ed. Engl.) 20, 344-361, (1981); sowie im Kunststoffhandbuch, Band Polystyrol, Carl Hanser Verlag (1968)).

Geeignete schlagzähmodifizierte Polystyrole sind größtenteils im Handel erhältlich und weisen eine Viskositätszahl (VZ) der Hartmatrix von 50 bis 130 ml/g (0,5 %ig in Toluol bei 23°C) auf, vorzugsweise von 60 bis 90 ml/g, besonders bevorzugt von 80 ml/g. Bevorzugt werden Standard-Polystyrol und schlagzähes Polystyrol, deren toluollöslicher Anteil ein mittleres Molekulargewicht M_{w} von 50000 bis 500000 g/mol aufweist und die gegebenenfalls noch mit Additiven, wie beispielsweise Mineralöl, Stabilisator, Antistatika, Flammschutzmittel oder Wachsen ausgerüstet sind.

Als monovinylaromatische Verbindungen für schlagzähmodifizierte Styrolpolymerisate kommen dabei insbesondere Styrol und die kernoder seitenkettensubstituierten Styrole in Betracht. Bevorzugte Substituenten sind Halogenatome, wie insbesondere Chlor und Brom, Hydroxyl und C₁₋₄-Alkyl, wie Methyl, Ethyl, n-Propyl, i-Propyl, n-Butyl und t-Butyl. Als Beispiele für diese Verbindungen seien Chlorstyrol, α-Methylstyrol, Styrol, p-Methylstyrol, Vinyltoluol und p-t-Butylstyrol genannt. Vorzugsweise wird jedoch Styrol allein verwendet.

Darüber hinaus können die eingesetzten schlagzähen Polystyrole durch die Verwendung spezieller Polybutadien-Kautschuke z.B. mit gegenüber herkömmlichen Kautschuken verändertem 1,4-cis- bzw. 1,4-trans-Anteil oder 1,2- und 1,4-Verknüpfungsanteil strukturell verändert sein. Bevorzugt sind solche schlagzähen Polystyrole mit einem Polybutadienanteil von 9 - 11 Gew.-%. Besonders bevorzugt ist dabei schlagzähes Polystyrol mit Zellteilchenmorphologie. Die mittlere Teilchengröße der Weichkomponente sollte im Bereich von 1,9 - 4,5 µm liegen. Ferner können anstelle von Polybutadienkautschuk auch andere Dienkautschuke sowie Elastomere von der Art des Ethylen-Propylen-Dien-Copolymer (EPDM-Kautschuk) sowie hydrierte Dienkautschuke eingesetzt werden.

Die am häufigsten angewandten Verfahren zur Herstellung schlagzähmodifizierter Styrolpolymerisate sind die Polymerisation in Masse oder Lösung in Gegenwart eines Kautschuks, wie beispielsweise in der US-Patentschrift 2,694,692 beschrieben, und Verfahren zur Massesuspensionspolymerisation, wie beispielsweise zu finden in der US-Patentschrift 2,862,906. Selbstverständlich sind auch andere Verfahren anwendbar, sofern die gewünschte Teilchengröße der Kautschukphase eingestellt wird.

Als Schlagzähmodifier (Komponente C) werden schlagzähmodifizierende Kautschuke in Anteilen von 0,5 bis 30 Gew.-%, bezogen auf das Gesamtgewicht der Formmasse, eingesetzt.

Als Komponente C) werden von der Komponente B) verschiedene, natürliche oder synthetische Kautschuke eingesetzt. Neben Naturkautschuk sind als Schlagzähmodifier z.B. Polybutadien, Polyisopren oder Mischpolymerisate des Butadiens und/oder Isoprens mit Styrol und anderen Comonomeren zu nennen, die eine Glasübergangstemperatur, bestimmt nach K.H.Illers und H.Breuer, Kolloidzeitschrift 190 (1), 16-34 (1963), von -100°C bis +25°C, vorzugsweise unter 0°C aufweisen. Außerdem können auch entsprechend hydrierte Produkte eingesetzt werden.

Bevorzugte Schlagzähmodifier C) sind Blockpolymere aus Vinylaromaten und Dienen. Schlagzähmodifier dieses Typs sind bekannt. In der DE-AS 1 932 234, der DE-AS 2 000 118 sowie der DE-OS 2 255 930 sind unterschiedlich aufgebaute vinylaromatische und Dienblöcke umfassende elastomere Blockcopolymerisate beschrieben. Die Verwendung entsprechender hydrierter Blockcopolymerisate gegebenenfalls im Gemisch mit der nicht hydrierten Vorstufe als Schlagzähmodifier ist beispielsweise beschrieben in der DE-OS 2 750 515, DE-OS 2 434 848, DE-OS 3 038 551, EP-A-0 080 666 und WO 83/01254. Auf die Offenbarung obiger Druckschriften wird hiermit ausdrücklich Bezug genommen.

In Frage kommen in diesem Zusammenhang u.a. auch hydrierte Styrol-Butadien-Dreiblockcopolymere (SEBS), wie das Handelsprodukt Kraton® 1651, oder hydrierte Styrol-Isopren-Zweiblockcopolymere (SEP), wie das Handelsprodukt Kraton® 1701 (beides Produkte der Fa. Shell). Selbstverständlich können auch Mischungen von Zweiblock- und Dreiblockcopolymeren eingesetzt werden.

Insbesondere sind Vinylaromat-Dien-Blockcopolymerisate aus Blökken einsetzbar, die eine Hartphase (Blocktyp S) und als Weichphase einen Block L/S aus Dien- und Vinylaromaten-Einheiten enthalten, der statistischen Aufbau besitzt. Der Aufbau kann dabei entlang der Kette im statistischen Mittel homogen oder inhomogen sein.

Man erhält ein solches kautschukelastisches Blockcopolymerisat dadurch, daß die Weichphase aus einem statistischen Copolymerisat eines Vinylaromaten mit einem Dien gebildet wird; statistische Copolymerisate von Vinylaromaten und Dienen erhält man durch Polymerisation in Gegenwart eines polaren Cosolvens.

Ein geeignetes Blockcopolymerisat kann z.B. durch eine der folgenden allgemeinen Formeln (1) bis (11) dargestellt werden:

(1) (S-L/S)ₙ;

(2) (S-L/S)ₙ-S;

(3) L/S-(S-L/S)ₙ;

(4) X-[(S-L/S)ₙ]ₘ+1

(5) X-[(L/S-S)ₙ]ₘ+1;

(6) X-[(S-L/S)ₙ-S]ₘ+1;

(7) X-[(L/S-S)ₙ-L/S]ₘ+1;

(8) Y-[(S-L/S)ₙ]ₘ+1;

(9) Y-[(L/S-S)ₙ]ₘ+1;

(10) Y-[(S-L/S)ₙ-S]ₘ+1;

(11) Y-[(L/S-S)ₙ-L/S]ₘ+1;

wobei
- S: für einen vinylaromatischen Block,
- L/S: für die Weichphase aus einem statistisch aus Dien- und vinylaromatischen Einheiten aufgebauten Block steht,
- X: den Rest eines n-funktionellen Initiators,
- Y: den Rest eines m-funktionellen Kopplungsmittels und
- m,n: natürliche Zahlen von 1 bis 10 bedeuten.

Bevorzugt ist ein Blockcopolymerisat der allgemeinen Formeln S-L/S-S, X-[-L/S-S]₂ und Y-[-L/S-S]₂ (Bedeutung der Abkürzungen wie vorstehend) und besonders bevorzugt ein Blockcopolymerisat, dessen Weichphase unterteilt ist in Blöcke

(12) (L/S)ₐ-(L/S)_{b};

(13) (L/S)ₐ-(L/S)_{b}-(L/S)ₐ;

(14) (L/S)ₐ(L/S)_{b}-(L/S)_{c};

wobei die Indices a, b, c für unterschiedliche Strukturen in dem Sinne stehen, daß das Vinylaromat/Dien-Verhältnis in den einzelnen Blöcken L/S unterschiedlich ist oder sich innerhalb eines Blocks in den Grenzen (L/S)ₐ(L/S)_{b} kontinuierlich ändert, wobei die Glasübergangstemperatur T_{g} jedes Teilblocks unter 25°C liegt.

Ein Blockcopolymerisat, das mehrere Blöcke L/S und/oder S mit unterschiedlicher Molmasse je Molekül aufweist, ist ebenfalls bevorzugt.

Ebenso kann an die Stelle eines ausschließlich aus vinylaromatischen Einheiten aufgebauten Blocks S ein Block L treten, da es insgesamt lediglich darauf ankommt, daß ein kautschukelastisches Blockcopolymerisat gebildet wird. Solche Copolymerisate können z.B. eine der Strukturen (15) bis (18) haben

(15) L-(L/S)

(16) (L/S)-L-(L/S)

(17) (L/S)₁-L-(L/S)₂

(18) L-(L/S)₁-(L/S)₂.

Bevorzugte Vinylaromaten sind Styrol, o-Methylstyrol, Vinyltoluol oder Mischungen dieser Verbindungen. Bevorzugte Diene sind Butadien, Isopren, Piperylen, 1-Phenylbutadien oder Mischungen dieser Verbindungen. Eine besonders bevorzugte Monomerkombination ist Butadien und Styrol.

Besonders bevorzugt sind die Weichblöcke aus 25 bis 75 Gew.-% Styrol und 25 bis 75 Gew.-% Butadien aufgebaut. Insbesondere bevorzugt sind Weichblöcke, die einen Butadienanteil von 34 bis 69 Gew.-% und einen Styrolanteil von 31 bis 66 Gew.-% enthalten.

Der Gewichtsanteil des Diens im gesamten Blockcopolymer liegt im Falle der Monomerkombination Styrol/Butadien bei 15 bis 65 Gew.-%, derjenige der vinylaromatischen Komponente entsprechend bei 85 bis 35 Gew.-%. Besonders bevorzugt sind Butadien-Styrol-Blockcopolymere mit einer Monomerzusammensetzung aus 25 bis 60 Gew.-% Dien und 75 bis 40 Gew.-% an vinylaromatischer Verbindung.

Die Blockcopolymere sind durch anionische Polymerisation in einem unpolaren Lösungsmittel unter Zusatz eines polaren Cosolvens erhältlich. Es besteht dabei die Vorstellung, daß das Cosolvens gegenüber dem Metallkation als Lewis-Base wirkt. Als Lösungsmittel werden bevorzugt aliphatische Kohlenwasserstoffe, wie Cyclohexan oder Methylcyclohexan, verwendet. Als Lewis-Basen werden polare aprotische Verbindungen, wie Ether und tertiäre Amine, bevorzugt. Beispiele für besonders effektive Ether sind Tetrahydrofuran und aliphatische Polyether wie Diethylenglycoldimethylether. Als tertiäre Amine sind Tributylamin und Pyridin zu nennen. Das polare Cosolvens wird dem unpolaren Lösungsmittel in einer geringen Menge, z.B. von 0,5 bis 5 Vol.-%, zugesetzt. Besonders bevorzugt ist Tetrahydrofuran in einer Menge von 0,1 bis 0,3 Vol.-%. Erfahrungsgemäß kommt man mit einer Menge von 0,2 Vol.-% in den meisten Fällen aus.

Durch die Dosierung und Struktur der Lewis-Base werden die Copolymerisationsparameter und der Anteil an 1,2- bzw. 1,4-Verknüpfungen der Dieneinheiten bestimmt. Geeignete Polymere haben z.B. einen Anteil von 15 bis 40 % an 1,2-Verknüpfungen und 85 bis 60 % an 1,4-Verknüpfungen bezogen auf alle Dieneinheiten.

Die anionische Polymerisation wird mittels metallorganischer Verbindungen initiiert. Bevorzugt sind Verbindungen der Alkalimetalle, besonders des Lithiums. Beispiele für Initiatoren sind Methyllithium, Ethyllithium, Propyllithium, n-Butyllithium, s-Butyllithium und t-Butyllithium. Die metallorganische Verbindung wird als Lösung in einem chemisch indifferenten (inerten) Kohlenwasserstoff zugesetzt. Die Dosierung richtet sich nach dem angestrebten Molekulargewicht des Polymers, liegt aber in der Regel im Bereich von 0,002 bis 5 Mol%, wenn man sie auf die Monomeren bezieht.

Die Polymerisationstemperatur kann 0 bis 130°C betragen. Bevorzugt wird der Temperaturbereich von 30 bis 100°C.

Für die mechanischen Eigenschaften ist der Volumenanteil der Weichphase im Festkörper von entscheidender Bedeutung. Erfahrungsgemäß liegt der Volumenanteil der aus Dien- und vinylaromatischen Sequenzen aufgebauten Weichphase bei 60 bis 99, bevorzugt bei 70 bis 90 und besonders bevorzugt bei 80 bis 90 Vol.-%. Die aus den vinylaromatischen Monomeren entstandenen Blöcke S bilden die Hartphase, deren Volumenanteil entsprechend 1 bis 40, bevorzugt 10 bis 30 und besonders bevorzugt 10 bis 20 Vol.-% ausmacht.

Meßbar ist der Volumenanteil der beiden Phasen mittels kontrastierter Elektronenmikroskopie oder Festkörper-NMR-Spektroskopie. Der Anteil der vinylaromatischen Blöcke läßt sich nach Osmiumabbau des Polydienanteils durch Fällen und Auswiegen bestimmen. Das künftige Phasenverhältnis eines Polymers läßt sich auch aus den eingesetzten Monomermengen berechnen, wenn man jedesmal vollständig auspolymerisieren läßt.

Eindeutig definiert wird das Blockcopolymere durch den Quotienten aus dem Volumenanteil in Prozent der aus den L/S-Blöcken gebildeten Weichphase und dem Anteil an Dieneinheiten in der Weichphase, der für die Kombination Styrol/Butadien zwischen 25 und 70 Gew.-% liegt.

Durch den statistischen Einbau der vinylaromatischen Verbindungen in den Weichblock des Blockcopolymeren und die Verwendung von Lewis-Basen während der Polymerisation wird die Glasübergangstemperatur (T_{g}) beeinflußt. Die Glasübergangstemperatur des gesamten Copolymers beträgt vorzugsweise -50°C bis +25°C, bevorzugt weniger als 0°C.

Das Molekulargewicht des Blocks S beträgt vorzugsweise 1000 bis 200000, insbesondere 3000 und 80000 [g/mol]. Innerhalb eines Moleküls können S-Blöcke unterschiedliche Molmasse haben.

Das Molekulargewicht des Blocks L/S beträgt üblicherweise von 2000 bis 250000 [g/mol]; bevorzugt sind Werte von 5000 bis 150000 [g/mol].

Auch Block L/S kann wie Block S innerhalb eines Moleküls unterschiedliche Molekulargewichtswerte einnehmen.

Das Kupplungszentrum X wird durch die Umsetzung der lebenden anionischen Kettenenden mit einem mindestens bifunktionellen Kupplungsagens gebildet. Beispiele für derartige Verbindungen sind in den US-PSen 3,985,830; 3,280,084; 3,637,554 und 4,091,053 zu finden. Bevorzugt werden z.B. epoxidierte Glyceride wie epoxidiertes Leinsamenöl oder Sojaöl eingesetzt; geeignet ist auch Divinylbenzol. Speziell für die Dimerisierung sind Dichlordialkylsilane, Dialdehyde, wie Terephthalaldehyd, und Ester, wie Ethylformiat oder -benzoat, geeignet.

Bevorzugte Polymerstrukturen sind S-L/S-S, X-[-L/S-S]₂ und Y-[-L/S-S]₂, wobei der statistische Block L/S selbst wieder in Blöcke L1/S1-L2/S2-L3/S3-... unterteilt sein kann. Bevorzugt besteht der statistische Block aus 2 bis 15 statistischen Teilblöcken, besonders bevorzugt aus 3 bis 10 Teilblöcken. Die Aufteilung des statistischen Blocks L/S in möglichst viele Teilblöcke Ln/Sn bietet den entscheidenden Vorteil, daß auch bei einem Zusammensetzungsgradienten innerhalb eines Teilblocks Ln/Sn, wie er sich in der anionischen Polymerisation unter praktischen Bedingungen nur schwer vermeiden läßt, sich der L/S-Block insgesamt wie ein nahezu perfektes statistisches Polymer verhält. Es bietet sich deshalb an, weniger als die theoretische Menge an Lewis-Base zuzusetzen, was den Anteil 1,4-Dienverknüpfungen erhöht, die Glastemperatur T_{g} absenkt und die Vernetzungsanfälligkeit des Polymeren mindert. Ein größerer oder ein kleinerer Anteil der Teilblöcke kann mit einem hohen Dienanteil ausgestattet werden. Dies bewirkt, daß das Polymer auch unterhalb der Glastemperatur der überwiegenden L/S-Blöcke eine Restzähigkeit behält und nicht vollständig versprödet.

Alle oben angegebenen Gewichts- und Volumenangaben beziehen sich auf die Monomerkombination Butadien/Styrol. Diese Angaben können jedoch ohne weiteres auf andere zu Styrol und Butadien technisch äquivalente Monomere umgerechnet werden.

Die Blockcopolymeren können dadurch aufgearbeitet werden, daß die Carbanionen mit einem Alkohol, wie Isopropanol, protoniert werden, die Reaktionsmischung angesäuert wird, z.B. mit einem Gemisch aus CO₂ und Wasser und das Lösungsmittel entfernt wird. Die Blockcopolymeren können Oxidationsinhibitoren und Antiblockmittel enthalten.

Auch Mischungen obiger Schlagzähmodifier sind einsetzbar.

Als Komponente D) wird erfindungsgemäß Polyethylen mit einer Dichte im Bereich von 0,935 bis 0,980 g/ml eingesetzt. Bevorzugt ist Polyethylen mit einer Dichte im Bereich von 0,940 bis 0,970 g/ml, besonders bevorzugt von 0,942 bis 0,958 g/ml. Die Dichte wird gemäß ISO 1183 (≙ DIN 53479) bestimmt. Bei dem erfindungsgemäßen Polyethylen handelt es sich um solches mit hoher Dichte, sogenanntes HD-Polyethylen. Dieser Polymertyp ist in der Regel nicht oder nur geringfügig verzweigt.

In den erfindungsgemäßen Formmassen liegt die Komponente D) in Mengen im Bereich von 1,0 bis 4,0 Gew.-%, bezogen auf das Gesamtgewicht der thermoplastischen Formmassen, vor.

Geeignetes HD-Polyethylen kann nach dem Niederdruckverfahren erhalten werden. In Frage kommen für die Herstellung von Polyethylen das Verfahren nach Ziegler auf der Basis von z.B. Titan(IV)chlorid und Aluminiumalkylen, das PHILLIPS-Verfahren, das sich eines Chromoxid-Katalysators geträgert auf Aluminiumoxid/Siliciumoxid bedient, sowie die Polymerisation mit einem geträgerten Vanadium- oder Molybdänoxid-Katalysator (STANDARD OIL-Verfahren) (s.a. Ullmann, 4. Auflage, Band 19, S. 167-226).

Der Schmelzindex bzw. die Fließfähigkeit in Frage kommender HD-Polyethylene, bestimmt anhand des MVR-Wertes gemäß ISO 1133 bei 190°C und einer Belastung von 2,16 kg, liegt üblicherweise im Bereich von 2 bis 10 g/10 ml, bevorzugt im Bereich von 3 bis 7 g/ml.

Geeignete Polyethylene verfügen über eine Schmelztemperatur im Bereich von 128 bis 136°C, bevorzugt von 130 bis 135°C, gemessen mittels Differentialthermoanalyse nach ISO 3146, und sind auch im Handel erhältlich. Besonders geeignete kommerzielle Produkte sind beispielsweise Lupolen® 4261A und Lupolen® 5261Z der Fa. BASF AG.

Die Komponente E) liegt in den erfindungsgemäßen Formmassen in Anteilen von 1,5 bis 15 Gew.-%, bezogen auf das Gesamtgewicht der thermoplastischen Formmasse vor. Geeignet sind z.B. phosphororganische Verbindungen der allgemeinen Formel I, II und III: 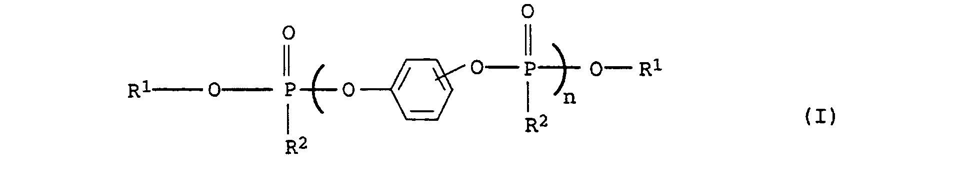 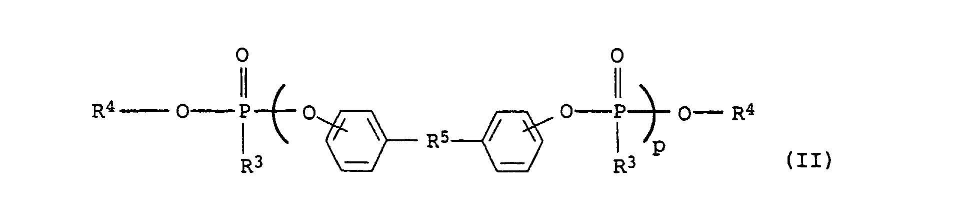 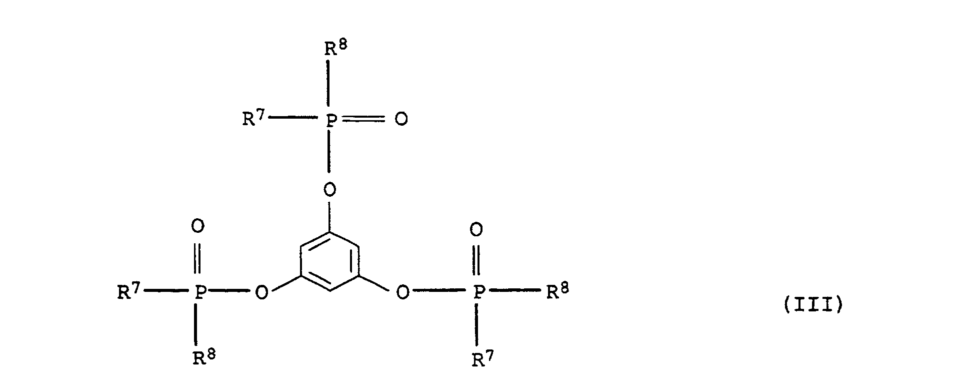 worin
- R¹ und R⁴: unabhängig voneinander für gegebenenfalls substituiertes Alkyl, Cycloalkyl oder Aryl stehen;
- R², R³, R⁷ und R⁸: unabhängig voneinander für gegebenenfalls substituiertes Alkyl, Cycloalkyl, Aryl, Alkoxy oder Aryloxy stehen,
- R⁵: für Alkylen, -SO₂-, -CO-, -N=N- oder -(R⁶)P(O)-steht, worin
- R⁶: für gegebenenfalls substituiertes Alkyl, Cycloalkyl, Aryl oder Alkylaryl steht und
- n und p: unabhängig voneinander einen Wert von 1 bis 30 einnehmen.

Geeignete Substituenten in Verbindungen der Formeln (I), (II) und (III) sind z.B. Cyano, Hydroxy und Alkyl.

Bevorzugte Alkylreste in Verbindungen der Formeln (I), (II) und (III) sind C₁-C₂₀-Alkyl, insbesondere C₁-C₁₂-Alkyl, wie Methyl, Ethyl, n-Propyl, n-Butyl, Neopentyl, n-Hexyl, n-Octyl, n-Nonyl, n-Dodecyl, 2-Ethylhexyl, 3,5,5-Trimethylhexyl und Cyanoethyl.

Bevorzugte Arylreste in Verbindungen der Formeln (I), (II) und (III) sind Phenyl und Naphthyl sowie einfach oder mehrfach substituierte Reste, wie Tolyl, Xylyl, Mesityl und Cresyl.

Bevorzugte Alkylarylreste in Verbindungen der Formeln (I), (II) und (III) sind C₁-C₂₀-Alkylaryl- und insbesondere C₁-C₁₂-Alkylarylreste, wobei Alkylteil und Arylteil wie oben definiert sind.

Bevorzugte Cycloalkylgruppen in Verbindungen der Formeln (I), (II) und (III) umfassen C₃-C₁₀-Cycloalkylgruppen, wie Cyclobutyl, Cyclopentyl, Cyclohexyl und Cycloheptyl.

Bevorzugte Alkoxyreste in Verbindungen der Formeln (I), (II) und (III) sind C₁-C₂₀-Alkoxyreste, wobei der C₁-C₂₀-Alkylteil wie oben definiert ist.

Bevorzugte Aryloxyreste in Verbindungen der Formeln (I), (II) und (III) sind auch solche, worin der Arylanteil wie oben definiert ist.

Bevorzugte Alkylenreste in Verbindung der Formeln (I), (II) und (III) sind C₁-C₆-Alkylenreste, wie Methylen, Ethylen, Propylen und Hexylen.

Dabei ist zu beachten, daß die technisch verfügbaren Produkte Mischungen verschiedener Oligomere bzw. Isomere darstellen können.

Die Herstellung von Phosphorsäureestern ist beschrieben in Houben-Weyl, "Methoden der organischen Chemie" Bd. XII/2, Thieme Verlag 1972. Bevorzugt werden die Verbindungen E) durch Umesterung unter Basenkatalyse bzw. durch Umsetzung von Phosphoroxichlorid mit Phenolen unter Mg- bzw. Al-Chlorid-Katalyse erhalten.

Bevorzugte Produkte der Formel (I) sind Hydrochinon- oder Resorcindiphenyldiphosphat. Bevorzugte Produkte der Formel (II) werden erhalten durch Reaktion von Bisphenol A bzw. S mit Triphenylphosphat unter Basenkatalyse.

Als Komponente E) können die erfindungsgemäßen Formmassen auch die folgenden Verbindungen einzeln oder im Gemisch enthalten:
(1) Phosphinoxide der allgemeinen Formel (IV) 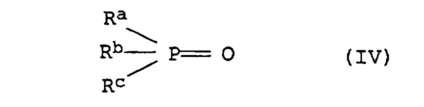 wobei R^{a}, R^{b} und R^{c} gleich oder verschieden sind und ausgewählt sind unter einem Wasserstoffatom, geradkettigen oder verzweigten, gegebenenfalls substituierten Alkyl-, Aryl-, Alkylaryl- oder Cycloalkylgruppen mit bis zu 40 Kohlenstoffatomen.
   Bevorzugte Alkylreste sind hierbei C₁-C₂₀-Alkyl, insbesondere C₁-C₁₂-Alkyl, wie Methyl, Ethyl, n-Propyl, n-Butyl, Neopentyl, n-Hexyl, n-Octyl, n-Nonyl, n-Dodecyl, 2-Ethylhexyl, 3,5,5-Trimethylhexyl und substituierte Alkylreste, wie Cyanoethyl.
   Bevorzugte Arylreste sind Phenyl und Naphthyl sowie einfach oder mehrfach substituierte Reste, wie Tolyl, Xylyl, Mesityl und Cresyl.
   Bevorzugte Alkylarylreste sind C₁-C₂₀-Alkylaryl- und insbesondere C₁-C₁₂-Alkylarylreste, wobei Alkylteil und Arylteil wie oben definiert sind.
   Bevorzugte Cycloalkylgruppen umfassen C₃-C₁₀-Cycloalkylgruppen, wie Cyclobutyl, Cyclopentyl, Cyclohexyl und Cycloheptyl.
   Geeignete Substituenten in den beschriebenen Resten R^{a} bis R^{c} sind z.B. Cyano, Hydroxy und C₁-₄-Alkyl.
(2) Phosphate der allgemeinen Formel (V) 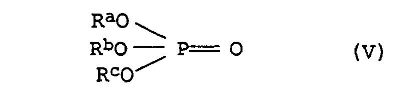 in der die Substituenten R^{a}, R^{b} und R^{c} gleich oder verschieden sind und die oben angegebenen Bedeutungen besitzen.

Beispiele für Phosphinoxide der Formel IV sind Triphenylphosphinoxid, Tritolylphosphinoxid, Trisnonylphenylphosphinoxid, Tricyclohexylphosphinoxid, Tris-(n-butyl)-phosphinoxid, Tris-(n-hexyl)- phosphinoxid, Tris-(n-octyl)-phosphinoxid, Tris-(cyanoethyl)- phosphinoxid, Benzylbis-(cyclohexyl)-phosphinoxid, Benzylbisphenylphosphinoxid, Phenylbis-(n-hexyl)-phosphinoxid. Besonders bevorzugt eingesetzt werden Triphenylphosphinoxid, Tricyclohexylphosphinoxid, Tris- (n-octyl)- phosphinoxid und Tris-(cyanoethyl)-phosphinoxid.

Als Phosphate der Formel V kommen vor allem alkyl- und arylsubstituierte Phosphate in Betracht. Beispiele sind Phenylbisdodecylphosphat, Phenylbisneopentylphosphat, Phenylethylhydrogenphosphat, Phenyl-bis-(3,5,5-trimethylhexylphosphat), Ethyldiphenylphosphat, Bis- (2-ethylhexyl)-p-tolylphosphat, Tritolylphosphat, Trixylylphosphat, Trimesitylphosphat, Bis-(2-ethylhexyl)-phenylphosphat, Tris-(nonylphenyl)-phosphat, Bis- (dodecyl)-p-tolylphosphat, Tricresylphosphat, Triphenylphosphat, Dibutylphenylphosphat, p-Tolyl-bis-(2,5,5-trimethylhexyl)- phosphat, 2-Ethylhexyldiphenylphosphat. Besonders geeignet sind Phosphorverbindungen, bei denen jedes R ein Aryl-Rest ist. Ganz besonders geeignet sind dabei Triphenylphosphat, Trixylylphosphat sowie Trimesitylphosphat. Des weiteren können auch cyclische Phosphate eingesetzt werden. Besonders geeignet ist Diphenylpentaerythritol-diphosphat.

Besonders bevorzugt sind Mischungen folgender Phosphinoxide und Phosphate: Triphenylphosphinoxid-Triphenylphosphat oder Trixylylphosphat, Tricyclohexylphosphinoxid und Triphenylphosphat, Tris-(cyanoethyl)phosphinoxid und Triphenylphosphat, Tris-(n-octyl)-phosphinoxid und Triphenylphosphat. Es können auch Mischungen aus mehreren Phosphinoxiden und Phosphaten eingesetzt werden, wie etwa die Mischung Triphenylphosphinoxid, Triphenylphosphat, Trixylylphosphat.

Des weiteren können Mischungen der höheren Phosphate und Monophosphate bzw. Monophosphinoxide in jedem Mischungsverhältnis eingesetzt werden.

Weiterhin können als Flammschutzmittel polymere Siloxanverbindungen oder Borverbindungen, wie in der EP-A 0 714 951 beschrieben, eingesetzt werden. Als siliziumhaltige Flammschutzmittel kommen solche aus der Gruppe der Siloxancopolymere, zum Beispiel Polyphenylenether/- oder Polyetherimid/siloxancopolymere in Frage. Derartige Polysiloxane sind im Handel erhältlich. Unter geeignete Borverbindungen fallen sowohl anorganische als auch organische Borverbindungen, beispielsweise Borsäure, Metallborate, Phosphate der Borsäure oder Perborate, insbesondere Metallborate oder -perborate, wie Alkalimetallborate (z.B. Natrium oder Kalium), Erdalkalimetallborate (z.B. Calcium, Barium oder Magnesium) oder Übergangsmetallborate wie Zinkborat. Die Metallborate und -perborate werden bevorzugt in wasserfreier Form eingesetzt. Der Anteil der Borverbindungen an den erfindungsgemäßen Formmassen liegt vorzugsweise, bezogen auf die Menge an Bor, im Bereich von 0,02 bis 5, bevorzugt von 0,2 bis 1 Gew.-%.

Als Flammschutzmittel sind schließlich auch solche Verbindungen geeignet, die Phosphor-Stickstoff-Bindungen enthalten, wie Phosphorsäureesteramide, Phosphorsäureesteramine, Phosphorsäureamide, Phosphonsäureamide, Phosphinsäureamide oder Tris(aziridinyl)-phosphinoxid. Diese entflammungshemmenden Additive sind größtenteils im Handel erhältlich.

Als Zusatzstoffe F) kommen in Betracht Hitze- und Lichtstabilisatoren, Gleit- und Entformungsmittel, Färbemittel, wie Farbstoffe und Pigmente, in üblichen Mengen. Weitere zusatzstoffe sind Verstärkungsmittel, wie Glasfasern, Asbestfasern, Kohlenstoffasern, aromatische Polyamidfasern und/oder Füllstoffe, Gipsfasern, synthetische Kalziumsilikate, Kaolin, kalziumiertes Kaolin, Wollastonit, Talkum und Kreide. Auch niedermolekulare oder hochmolekulare Polymere kommen als Zusatzstoffe in Betracht, wobei Polyethylenwachs als Gleitmittel besonders bevorzugt ist. Der Anteil dieser Zusätze beträgt im allgemeinen nicht mehr als 50 und insbesondere nicht mehr als 30 Gew.-%, bezogen auf das Gesamtgewicht der Komponenten.

Die Herstellung der erfindungsgemäßen Formmassen erfolgt zweckmäßigerweise durch Mischen der Komponenten bei Temperaturen im Bereich von 250 bis 300°C in üblichen Mischvorrichtungen, wie Knetern, Banbury-Mischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei oder gegebenenfalls mehrere Komponenten vorgemischt sein oder es können auch alle Komponenten gemeinsam gemischt werden.

Aus den erfindungsgemäßen Formmassen lassen sich z.B. durch Spritzguß oder Extrusion Formkörper herstellen, die flammwidrig sind, bei der Brandprüfung nach UL 94 nicht zum brennenden Abtropfen neigen und gleichzeitig eine gute (multiaxiale) Zähigkeit und gute Fließfähigkeit aufweisen.

Die erfindungsgemäßen Formmassen eignen sich sehr gut zur Herstellung von Formteilen aller Art, z.B. durch Spritzguß oder Extrusion. Sie können weiterhin zur Herstellung von Folien und Halbzeug im Tiefzieh- oder Blasverfahren verwendet werden.

Mit den erfindungsgemäßen thermoplastischen Formmassen gelingt eine V1-Klassifizierung gemäß der Prüfung nach UL 94. Brennendes Abtropfen wird nur noch sehr eingeschränkt oder überhaupt nicht beobachtet. Verlängerte Brandzeiten treten ebenfalls nicht auf. Darüber hinaus verlieren die erfindungsgemäßen thermoplastischen Formmasssen durch den Zusatz von Polyethylen hoher Dichte nicht die eingangs geschilderten vorteilhaften rheologischen und mechanischen Eigenschaften von Polyphenylenether und vinylaromatische Polymere enthaltenden Formmassen.

### Beispiele:

Es wurden die folgenden Komponenten eingesetzt:

### Komponente A)

Poly-2,6-dimethyl-1,4-phenylenether mit einem mittleren Molekulargewicht (M_{w}) von 40000 g/mol.

### Komponente B-1)

Schlagfestes Polystyrol mit 9 Gew.-% Polybutadien und Zellteilchenmorphologie, mittlere Teilchengröße der Weichkomponente von 1,9 µm. Die Viskositätszahl der Hartmatrix beträgt 80 ml/g (0,5 gew.-%ig in Toluol bei 23°C).

### Komponente B-2)

Schlagfestes Polystyrol mit 11 Gew.-% Polybutadien und Zellteilchenmorphologie, mittlere Teilchengröße der Weichkomponente von 3,5 µm. Die Viskositätszahl der Hartmatrix beträgt 80 ml/g (0,5 gew.-%ig in Toluol bei 23°C).

### Komponente C)

Ein Ethylen-Butylen-Styrol-Blockcopolymer mit 29 Gew.-% Polystyrol (Kraton® G 1650 der Fa. Shell).

### Komponente D)

- D-1:: Polyethylen mit einer Dichte im Bereich von 0,943 bis 0,947 g/ml, einem Staudinger-Index von 370 ml/g (nach ISO 1628) und einem Schmelzpunkt von 130°C (Lupolen® 4261A; BASF AG),
- D-2:: Polyethylen mit einer Dichte im Bereich von 0,952 bis 0,956 g/ml, einem Staudinger-Index von 450 ml/g und einem Schmelzpunkt von 133°C (Lupolen® 5261Z; BASF AG) ,
- D-V1:: Ultrahochmolekulares Polyethylen mit einer Dichte im Bereich von 0,930 g/ml, einem Staudinger-Index von 3300 ml/g und einem Schmelzpunkt von 133°C (Lupolen® UHM301; BASF AG),
- D-V2:: Polyethylen mit einer Dichte im Bereich von 0,926 bis 0,929 g/ml und einem Schmelzpunkt von 114°C (Lupolen® 3020D; BASF AG),

### Komponente E)

E-1:Triphenylphosphinoxid
E-2:Triphenylphosphat, Disflamoll® TP (Bayer AG)

### Herstellung der thermoplastischen Formmassen

Die Komponenten A) bis E) wurden auf einem Zweiwellenextruder (ZSK 30 der Fa. Werner & Pfleiderer) bei 280°C gemischt, als Strang ausgetragen, gekühlt und granuliert. Das getrocknete Granulat wurde bei 260°C zu Rundscheiben und Flachstäben für die UL 94-Prüfung verarbeitet.

Die Schädigungsarbeit W_{S} wurde nach DIN 53443 bei 23°C bestimmt.

Die Fließfähigkeit (MVI) wurde an getrocknetem Granulat gemäß DIN 53735 (250°C, 21,6 kg) bestimmt.

Die Zusammensetzung der Formmassen und die Ergebnisse der Prüfungen sind der nachfolgenden Tabelle zu entnehmen.

**Tabelle 1:**

| Formmasse Nr. | V1*⁾ | 1 | 2 | 3 | 4 | V2*⁾ | V3*⁾ |
|---|---|---|---|---|---|---|---|
| Komponente [Gew.-%] | | | | | | | |
| A | 39 | 39 | 39 | 39 | 39 | 39 | 39 |
| B-1 | 47 | 45,5 | 44 | 45,5 | 44 | 44 | 44 |
| B-2 | 2 | 2 | 2 | 2 | 2 | 2 | 2 |
| C | 2 | 2 | 2 | 2 | 2 | 2 | 2 |
| D-1 | - | 1,5 | 3 | - | - | - | - |
| D-2 | - | - | - | 1,5 | 3 | - | - |
| D-V1 | - | - | - | - | - | 3 | - |
| D-V2 | - | - | - | - | - | - | 3 |
| E-1 | 5 | 5 | 5 | 5 | 5 | 5 | 5 |
| E-2 | 5 | 5 | 5 | 5 | 5 | 5 | 5 |
| Wₛ [Nm] | 31 | 36 | 38 | 36 | 35 | 21 | 30 |
| MVI [ml/10 min] | 150 | 164 | 158 | 159 | 155 | 114 | 172 |
| UL 94 | V-2 | V-1 | V-1 | V-1 | V-1 | V-1 | V-2 |

| | | | | | | | |
|---|---|---|---|---|---|---|---|
| *⁾ V: Vergleichsversuche | | | | | | | |

## Patentansprüche

1. Halogenfrei flammgeschützte thermoplastische Formmassen, enthaltend
A) 15 bis 87 Gew.-% eines Polyphenylenethers,
B) 10 bis 82 Gew.-% eines schlagzähmodifizierten vinylaromatischen Polymers, das mit der Komponente A) verträglich ist,
C) 0,5 bis 30 Gew.-% an Schlagzähmodifiern, die von der Komponente B) verschieden sind,
D) 1,0 bis 4,0 Gew.-% an Polyethylen mit einer Dichte, bestimmt nach ISO 1183, im Bereich von 0,935 bis 0,980 g/mL,
E) 1,5 bis 15 Gew.-% eines Flammschutzmittels sowie
F) 0 bis 50 Gew.-% an weiteren Zusätzen,
wobei die Komponenten A) bis F) sich immer zu 100 Gew.-% addieren.

2. Thermoplastische Formmassen nach Anspruch 1, **dadurch gekennzeichnet, dass** man als Schlagzähmodifier Blockcopolymere aus Vinylaromaten und Dienen oder hydrierte, aus Vinylaromaten und Dienen aufgebaute Blockcopolymere oder Mischungen der vorgenannten Blockcopolymere verwendet.

3. Thermoplastische Formmassen nach den Ansprüchen 1 bis 2, **dadurch gekennzeichnet, daß** als Komponente A) ein Poly(2,6-dialkyl-1,4-phenylenether) eingesetzt wird.

4. Thermoplastische Formmassen nach den Ansprüchen 1 bis 3, **dadurch gekennzeichnet, daß** der Polyphenylenether A) ein mittleres Molekulargewicht (M_{w}) im Bereich von 25000 bis 50000 g/mol aufweist.

5. Thermoplastische Formmassen nach den Ansprüchen 1 bis 4, **dadurch gekennzeichnet, dass** man als Komponente B) schlagzähmodifizierte Homo- oder Copolymerisate von vinylaromatischen Monomeren mit 8 bis 12 C-Atomen einsetzt, welche in Gegenwart eines Kautschuks hergestellt worden sind.

6. Thermoplastische Formmassen nach den Ansprüchen 1 bis 5, **dadurch gekennzeichnet, dass** als Komponente B) schlagfestes Polystyrol mit 8 bis 17 Gew.-% Polybutadien eingesetzt wird.

7. Thermoplastische Formmassen nach den Ansprüchen 1 bis 6, **dadurch gekennzeichnet, dass** als Komponente D) Polyethylen mit einer Dichte im Bereich von 0,940 bis 0,970 g/ml eingesetzt wird.

8. Verwendung der Formmassen gemäß den Ansprüchen 1 bis 7 zur Herstellung von flammwidrigen Formkörpern, Fasern und Folien.

9. Formkörper, Fasern und Folien, erhältlich aus den flammwidrigen thermoplastischen Formmassen gemäß den Ansprüchen 1 bis 7 als wesentliche Komponente.

10. Verwendung von Polyethylen mit einer Dichte im Bereich von 0,935 bis 0,980 g/ml, bestimmt nach ISO 1183, als Antitropfmittel in thermoplastischen Formmassen auf der Basis von Polyphenylenethern A) und schlagzähmodifizierten vinylaromatischen Polymeren B), die mit der Komponente A) verträglich sind, enthaltend einen Schlagzähmodifier C), der von der Komponente B) verschieden ist, und ein Flammschutzmittel.

## Claims

1. Flame retarded, thermoplastic molding compositions free of halogen comprising
A) 15 to 87 weight-% polyphenylene ethers,
B) 10 to 82 weight-% impact modified vinyl aromatic polymer, compatible with component A),
C) 0,5 to 30 weight-% impact modifiers different to component B)
D) 1,0 to 4,0 weight-% polyethylene of a density according to ISO 1183, in a range of 0,935 to 0,980 g/ml,
E) 1,5 to 15 weight-% of a flame retarder and
F) 0 to 50 weight-% of other additives
wherein the components A) to F) add always up to 100 weight-%.

2. Thermoplastic molding composition according to claim 1, wherein as impact modifiers block copolymers of vinyl aromates or dienes or hydrated block copolymers combined of vinyl aromates or dienes or mixtures of said block co-polymeres are used.

3. Thermoplastic molding composition according to claims 1 or 2, wherein as component A) a poly (2,6-dialkyl-1, 4-phenylene ether) is used.

4. Thermoplastic molding composition according to claims 1 to 3, wherein the polyphenylene ether has a medium molecular weight (M_{w}) in a range of 25.000 to 50.000 g/mol.

5. Thermoplastic molding composition according to claims 1 to 4, wherein as component B) impact modified homo- or copolymerisates of vinyl aromatic monomers with 8 to 12 C-atoms are used, produced in the presence of a rubber.

6. Thermoplastic molding composition according to claims 1 to 5, wherein as component B) a high impact polystyrole with 8 to 17 weight-% poly-butadiene is used.

7. Thermoplastic molding composition according to claims 1 to 6, wherein as component D) a polyethylene with a density in the range of 0,940 to 0,970 g/ml is used.

8. Use of molding compositions according to claim 1 to 7, in the production of flame retarded moldings, fibers and foils.

9. Moldings, fibers and foils obtainable with the thermoplastic molding composition according to claims 1 to 7, as main component.

10. Use of polyethylene wit a density of 0,935 to 0,980 g/ml according to ISO 1183, as antidrip agents in thermoplastic molding compositions on the basis of polyethylene ethers A) and impact modified polymers B) compatible with component A) containing an impact modifier C) different from component B) and a flame retarding agent.

## Revendications

1. Matières à mouler thermoplastiques ignifugées exemptes d'halogènes, contenant
A) à concurrence de 15 à 87 % en poids, un polyphénylène-éther,
B) à concurrence de 10 à 82 % en poids, un polymère vinylaromatique qui a été modifié pour le rendre résistant aux chocs, qui est compatible avec le composant A),
C) à concurrence de 0,5 à 30 % en poids, des agents de modification pour rendre résistant aux chocs, qui sont différents du composant B),
D) à concurrence de 1,0 a 4,0 % en poids, du polyéthylène possédant une densité, déterminée conformément à la norme ISO 1183, dans la plage de 0,935 à 0,980 g/ml,
E) à concurrence de 1,5 à 15 % en poids, un agent ignifuge, et
F) à concurrence de 0 à 50 % en poids, d'autres additifs,
les composants A) à F) s'ajoutant toujours pour donner 100 % en poids.

2. Matières à mouler thermoplastiques selon la revendication 1, **caractérisées en ce qu'**on utilise, à titre d'agents de modification pour rendre résistant aux chocs, des copolymères séquences de composés vinylaromatiques et de diènes, ou des copolymères séquencés hydrogénés constitués par des composés vinylaromatiques et par des diènes ou encore des mélanges des copolymères séquencés susmentionnés.

3. Matières à mouler thermoplastiques selon les revendications 1 à 2, **caractérisées en ce qu'**on met en oeuvre, à titre de composant A), un poly(2,6-dialkyl-1,4-phénylène-éther).

4. Matières à mouler thermoplastiques selon les revendications 1 à 3, **caractérisées en ce que** le polyphénylène-éther A) présente un poids moléculaire moyen (M_{w}) dans la plage de 25.000 à 50.000 g/mole.

5. Matières à mouler thermoplastiques selon les revendications 1 à 4, **caractérisées en ce qu'**on met en oeuvre, à titre de composant B), des homopolymères ou des copolymères de monomères vinylaromatiques contenant de 8 à 12 atomes de carbone, modifiés pour les rendre résistants aux chocs, qui ont été préparés en présence d'un caoutchouc.

6. Matières à mouler thermoplastiques selon les revendications 1 à 5, **caractérisées en ce qu'**on met en oeuvre, à titre de composant B), du polystyrène résistant aux chocs, comprenant du polybutadiène à concurrence de 8 à 17 % en poids.

7. Matières à mouler thermoplastiques selon les revendications 1 à 6, **caractérisées en ce qu'**on met en oeuvre, à titre de composant D), du polyéthylène possédant une densité dans la plage de 0,940 à 0,970 g/ml.

8. Utilisation des matières à mouler selon les revendications 1 à 7 pour la fabrication de corps moulés, de fibres et de feuilles ininflammables.

9. Corps moulés, fibres et feuilles, que l'on obtient à partir des matières à mouler thermoplastiques ininflammables selon les revendications 1 à 7, à titre de composant essentiel.

10. Utilisation de polyéthylène possédant une densité dans la plage de 0,935 à 0,980 g/ml, déterminée conformément à la norme ISO 1183, à titre d'agents anti-goutte dans des matières à mouler thermoplastiques à base de polyphénylène-éthers A) et de polymères vinylaromatiques B) qui ont été modifiés pour les rendre résistants aux chocs et qui sont compatibles avec le composant A), contenant un agent de modification C) pour rendre résistant aux chocs qui est différent du composant B) et un agent ignifuge.
